# EUROPEAN PATENT APPLICATION

(11) **EP 1 919 126 A1**
(43) Date of publication of application: **07.05.2008**
(21) Application number: 06123271.6
(22) Date of filing: 31.10.2006
(51) Int. Cl.: H04L 12/24, H04L 12/28

(54) **Method and device for configuration of wireless communication devices**

(71) Applicant: ABB RESEARCH LTD., 8050 Zürich (CH)
(72) Inventor: Aakvaag, Niels, 0454, Oslo 2 (NO); Huck, Ralf, 63538, Großkrotzenburg (DE)
(74) Representative: Holmberg, Nils Anders Patrik

(57) **Abstract**

The present invention relates to a method for wireless communication comprising at least one data and information containing unit, capable of wireless communication and transmittal of data, a number of devices arranged within the coverage area of the transmission, and capable of communicating with the data containing unit, comprising the steps of: - establishing wireless contact between the data containing unit and the devices, establishing a communication path between the data containing unit and the devices, when communication is established with all devices within the coverage area, transfer information and data to all devices simultaneously. The present invention also relates to a system and software for performing the method.

## Description

### TECHNICAL AREA

The present invention relates to a method and device for configuration of communication devices and in particular wireless devices.

### TECHNICAL BACKGROUND

Many machines and other equipment are today arranged with human-machine interfaces (HMI) often providing a graphical interface between the user and the machine. The interface enables the user to program the machine, control it during the work cycle of the machine, do maintenance and status checks of the machine and components and sensors thereof etc. The HMI is further equipped with processors, I/O units, memory and software to enable the function and communication with the machine.

In this context, it could of course be other types of instruments for measuring, drive units and many other types of equipment having processors, I/O means, display means and communication means enabling communication with other types of equipment, devices, and machinery. Also in this context, many devices are arranged with detachable individual configuration panels, which help the operator to configure the device.

The HMI can be communicating with other devices and machines via a wireless communication system, which could be any type of existing wireless communication system. Examples of transmission technologies are Bluetooth®, Wi-Fi and ZigBee. For industrial applications, different types of industry standard field busses are utilized, such as for example Foundation fieldbus, Hart and Profibus. These field bus protocols have been used in industrial applications for a number of years in wired communication systems. During recent years, these field bus protocols have been developed also for wireless communication systems.

As mentioned, these communication devices utilize software programs for performing a number of functions, tasks and communication with other devices, machines and the like, and often commissioning, configuration, monitoring or maintenance is done via the graphical interface of the device. This is also the case for upgrading of the software, i.e. this is done on each communication device independently.

If there is a rather large number of these types of communication devices, it is a very time-consuming and tedious work to perform the above mentioned measures on each communication device. Furthermore there is always a risk that for example one or more of the devices will become erroneously configured when done manually.

### BRIEF DESCRIPTION OF THE INVENTION

The aim of the present invention is to provide a method and system for the commissioning, configuration, monitoring, maintenance and the like work on wireless communication devices.

This aim is achieved in accordance with the features of the independent patent claims. Preferable embodiments of the invention are subject of the dependent patent claims.

According to a main aspect of the invention it is characterised by a method for wireless communication comprising at least one data and information containing unit, capable of wireless communication and transmission of data, a number of devices arranged within the coverage area of the transmission, and capable of communicating with the data containing unit, comprising the steps of establishing wireless contact between the data containing unit and the devices, establishing a communication path between the data containing unit and the devices, when communication is established with all devices within the coverage area, transfer information and data to all devices simultaneously.

According to another aspect of the invention, the method comprises the further step of transmitting data and information from the devices to the data containing unit.

According to a further aspect of the invention, it comprises the step wherein data is transmitted from the devices when communication has been established and the data containing unit has sent a simultaneous request for transfer of data from the devices.

According to yet an aspect of the invention, it comprises the further steps of if, after the transfer of data from the data containing unit to the devices has been completed, a device has not received all data, the device sends a request to the data containing unit to retransmit the data to the requesting device.

According to yet another aspect of the invention, it comprises the further step of, if some devices require additional or different data to be transmitted to them from the data containing unit, the devices are identified during establishing of contact, and the correct data for the identified devices are transmitted.

According to yet a further aspect of the invention, it comprises the further step of, if some devices require additional or different data to be transmitted to them from the data containing unit, the same data is transmitted to all devices where certain parts of the data is device specific.

The main advantage with the present invention is that it enables commissioning, configuration, monitoring or maintenance of so called field devices in an industrial environment simultaneously and also automatically by the data containing unit and the wireless communication between the data containing unit and the devices. Since the devices also have transmitting means requests and data may be sent from the devices to the data containing unit, wherein for example the data containing unit could store and process data transmitted from the devices.

With the present invention it is also possible to transmit data simultaneously from the data containing unit to devices that require slightly different data, i.e. that not all the devices are identical.

Due to the present invention, there is no more need for the tedious and work-consuming task of manually handle each device separately. The risk of wrong manual handling of a device is greatly reduced both due to the simultaneous and automatic transfer of data but also due to the possibility of an individual device to request re-transmission of data if the initial transfer was not successful.

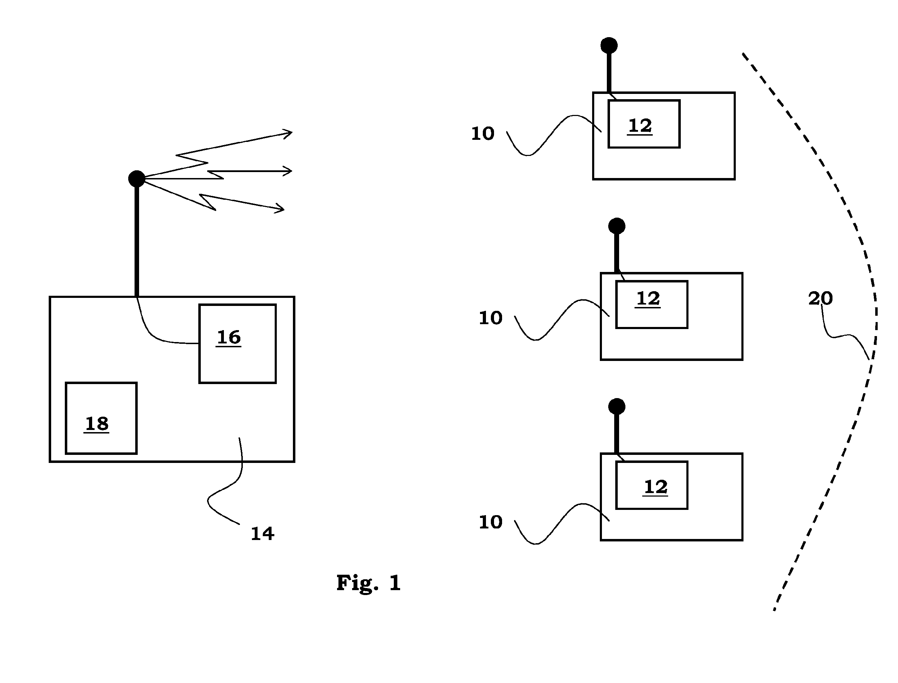

These and other aspects of and advantages with the present invention will become apparent from the following detailed description and from the accompanying drawing, Fig. 1, which schematically shows a system for performing the method according to the present invention.

### BRIEF DESCRIPTION OF THE DRAWINGS

In the following detailed description of the invention, reference will be made to the accompanying drawings, of which,
- Fig. 1: shows schematically a system utilizing the method of the present invention,
- Fig. 2: shows a similar schematic system of Fig. 1, and
- Fig. 3: shows an example of different information transmitted with the method according to the present invention.

### DETAILED DESCRIPTION OF THE INVENTION

The present invention relates inter alia to devices that are capable of performing portions of an overall process control strategy in a process control system. Figure 1 shows schematically a system for performing the method according to the present invention.

The devices 10 such as field devices in an industrial application, can communicate with other devices and/or servers, information centres or transmitting units via wireless communication means. That is, each device is arranged with circuits, processors, memory means, I/O means, signal receiving and transmitting means (all represented by 12 in Fig. 1) and software in order to enable wireless communication. An example of a communication transmission technology that can be used in this context is ZigBee, but it is to be understood that other types of transmission technologies available can be used. Further, for industrial applications, different types of fieldbus protocols may be used, such as Foundation fieldbus, Hart wireless field bus and Profibus, to mention a few.

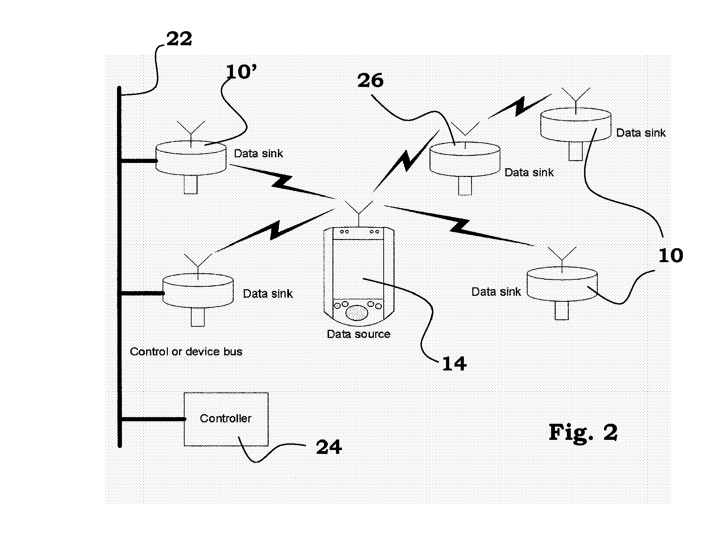

According to one aspect of the invention, a single unit 14, data source, is arranged as a transmitter for transmitting information to the devices and for collecting information from each transmitting device. This unit thus is arranged with processor circuits, processors, memory means, I/O means, signal receiving and transmitting means (all represented by 16 in Fig. 1), data storage means 18 and software in order to enable wireless transmittal of information to the devices and to receive, store and process information from the devices. Of course the system could comprise a wired part of the process control system such as a backbone control and/or device bus 22 to which some of the devices 10' are connected as well as controllers 24 and other types of devices, as shown in Fig. 2.

For example if the devices need an upgrade of its software, the single unit, having the software upgrade stored in the storage means, establishes contact with all devices within the coverage area 20 of the transmission signal, such as radio contact with all devices within the radio distance. A connection is established between the transmitting unit and the devices for enabling transfer and exchange of data. When connection has been established with all devices within the coverage area, the transmitting unit transfers data to all devices simultaneously, i.e. all devices are upgraded with the same data simultaneously. In this context it is to be understood that the communication links to the devices could be either direct or multi-hop, i.e. from one device to another, denoted with 26 in Fig. 2.

When the transfer is complete, the transmitting unit will stop the transmission. The individual devices may then, if necessary, perform the necessary steps to complete the upgrade. If one or a few devices however have not received all data necessary for the upgrade, due for instance to loss of data because of a weak transmitting signal or an interruption in the transfer, the device will try to establish contact with the single unit on an individual basis to have the unit resend the data to that specific device.

It is of course feasible that the transmitting unit does not transfer data to the devices but for example sends a signal to all devices within the coverage area to perform a specific task. That could for example be the case if the single unit requests status data from the devices, or collection of information from the devices. The signal then triggers the devices to transmit the requested data to the single unit.

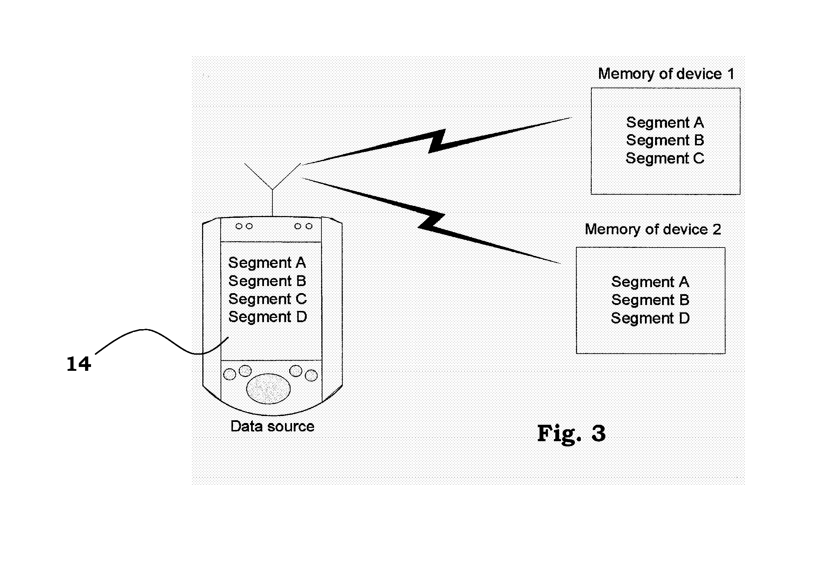

The devices could be identical and then the data transmitted from the transmitting unit and downloaded in the devices are identical. However it is of course feasible that there are differences between the devices and that each device needs slightly different data downloaded. In this case, when the transmitting unit establishes contact with the devices, information from each device is transmitted to the single unit as a form of identification, which then enables the single unit to transfer the data to that specific device. In this context one might use the concept of inheritance used in object oriented programming by sending the same file to all devices but where certain parts of the information transmitted are device-specific. Figure 3 shows an example of transmission of device specific information/data. The specificity of the device may be in that it has its own set-points and configuration. Example: A and B specifies that it is a temperature sensor and what type. C and D are separate configuration files with set-points and other operating conditions.

The methods according to the present invention may be implemented as software, hardware, or a combination thereof. A computer program product implementing the method or a part thereof comprises software or a computer program run on a general purpose or specially adapted computer, processor or microprocessor. The software includes computer program code elements or software code portions that make the computer perform the method. The program may be stored in whole or part, on, or in, one or more suitable computer readable media or data storage means such as a magnetic disk, CD-ROM or DVD disk, hard disk, magneto-optical memory storage means, in RAM or volatile memory, in ROM or flash memory, as firmware, or on a data server. Such a computer program product can also be supplied via a network, such as Internet.

It is to be understood that many existing techniques for wireless communication may be utilized within the scope of the present invention, and that there could be more than one transmitting unit if the coverage area is large, whereby the transmitting units are able to communicate with each other in order to have the same data and information to transfer to the devices and in order to preferably transmit data to the devices they are communicating with simultaneously. It is thus to be understood that the present invention may be modified in numerous ways known to the person skilled in the art when presented with the present invention.

## Claims

1. Method for wireless communication comprising at least one data and information containing unit, capable of wireless communication and transmittal of data, a number of devices arranged within the coverage area of the transmission, and capable of communicating with the data containing unit, comprising the steps of:
- establishing wireless contact between the data containing unit and the devices,
- establishing a communication path between the data containing unit and the devices,
- when communication is established with all devices within the coverage area, transfer information and data to all devices simultaneously.

2. Method according to claim 1, wherein the method comprises the further step of:
- transmitting data and information from the devices to the data containing unit.

3. Method according to claim 2, wherein data is transmitted from the devices when communication has been established and the data containing unit has sent a simultaneous request for transfer of data from the devices.

4. Method according to any of the preceding claims, wherein it comprises the step of establishing communication between two or more devices, and that information transferred from the data containing unit to one device is transmitted from that device to further communicating devices.

5. Method according to any of the preceding claims, wherein it comprises the further steps of:
- if, after the transfer of data from the data containing unit to the devices has been completed, a device has not received all data, the device sends a request to the data containing unit to retransmit the data to the requesting device.

6. Method according to any of the preceding claims, wherein it comprises the further step of:
- if some devices require additional or different data to be transmitted to them from the data containing unit, the devices are identified during establishing of contact, and the correct data for the identified devices are transmitted.

7. Method according to any of the preceding claims, wherein it comprises the further step of:
- if some devices require additional or different data to be transmitted to them from the data containing unit, the same data is transmitted to all devices where certain parts of the data is device specific.

8. System for wireless communication comprising at least one data and information containing unit, comprising means for wireless communication and transmittal of data, a number of devices arranged within the coverage area of the transmission, and comprising means for communicating with the data containing unit, further comprising means for establishing wireless contact between the data containing unit and the devices, and means for establishing a communication path between the data containing unit and the devices, wherein, when communication is established with all devices within the coverage area, transfer information and data to all devices simultaneously.

9. Data containing unit for wireless communication comprising means for wireless communication and transmittal of data, further comprising means for establishing wireless contact between the data containing unit and devices capable of communicating with the data containing device, wherein the data containing device is designed and arranged to perform the steps according to any of the preceding method claims, in cooperation with the devices.

10. Device for wireless communication comprising means for communicating with a data containing unit according to claim 8 and arranged and designed to perform the steps according to any of the preceding method claims, in cooperation with the data containing unit.

11. Computer program product comprising computer code means and/or software code portions for making a processor perform the steps of claim 1.

12. Computer program product according to claim 11 supplied via a network, such as Internet.

13. Computer readable medium containing a computer program product according to claim 11.

14. Computer program comprising computer code means and/or software code portions for making a processor perform the steps of claim 1.

15. Computer program according to claim 14 supplied via a network, such as Internet.
